# EUROPEAN PATENT APPLICATION

(11) **EP 4 503 270 A1**
(43) Date of publication of application: **05.02.2025**
(21) Application number: 23880049.4
(22) Date of filing: 19.09.2023
(51) Int. Cl.: H01M 10/6556, H01M 10/6567, H01M 10/6568, H01M 10/613, H01M 50/682, H01M 50/271, H01M 50/211

(54) **BATTERY PACK WITH IMPROVED COOLING STRUCTURE AND DEVICE INCLUDING SAME**

(30) Priority: 18.10.2022 KR 20220133707
(71) Applicant: LG Energy Solution, Ltd., Seoul 07335 (KR)
(72) Inventor: LEE, Jung Hoon, Daejeon 34122 (KR); UM, Taeki, Daejeon 34122 (KR); RYU, Jaeuk, Daejeon 34122 (KR); KIM, Dooseung, Daejeon 34122 (KR)
(74) Representative: Plasseraud IP
(86) International application number: PCT/KR2023/014140
(87) International publication number: WO 2024/085470

(57) **Abstract**

A battery pack according to an embodiment of the present disclosure includes: a battery module that includes a cell assembly formed by stacking a plurality of battery cells, and a module frame for housing the cell assembly, a pack housing on which at least one battery module is mounted, and a cooling tube assembly that is mounted within the pack housing, wherein one end of the battery module is disposed to overlap with the cooling tube assembly.

## Description

### [TECHNICAL FIELD]

### Cross Citation with Related Application(s)

This application claims the benefit of Korean Patent Application No. 10-2022-0133707 filed on October 18, 2022 with the Korean Intellectual Property Office, the disclosure of which is incorporated herein by reference in its entirety.

The present disclosure relates to a battery pack and a device including the same, and more particularly, to a battery pack with improved cooling structure and a device including the same.

### [BACKGROUND]

As the technology development of and the demand for mobile devices have increased, the demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Further, when a plurality of battery cells are connected in series/parallel to configure a battery pack, it is common to configure a battery module composed of at least one battery cell first and then configure a battery pack by using at least one battery module and adding other components.

Since battery cells constituting such a medium- or large-sized battery module are secondary batteries which can be charged and discharged, such high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly disposed to increase the mileage of the vehicle, a flame or heat generated in any one of the battery modules can easily propagate to an adjacent battery module, which may eventually lead to ignition or explosion of the battery pack itself.

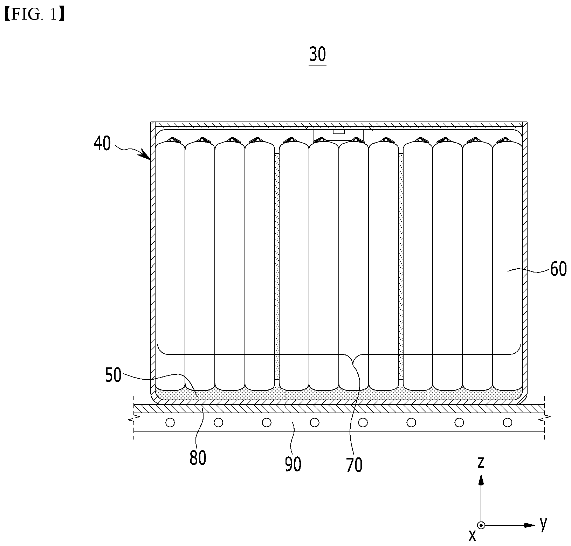

FIG. 1 is a diagram showing heat discharge paths in a conventional battery module.

Referring to FIG. 1, a conventional battery module 30 includes a cell assembly 70 including battery cells 60 stacked in a preset direction, and a module frame 40 that houses the cell assembly 70, wherein the cell assembly 70 is fixedly located on the thermally conductive resin layer 50 located on the lower surface of the module frame 40. In this case, in order to cool the heat generated in the cell assembly 70, a heat sink 90 facing the bottom part of the module frame 40 located in the -z axis direction of FIG. 1 is provided, and a heat conduction pad 80 for heat transfer may be further installed between the heat sink 90 and the bottom part of the module frame 40.

However, since the heat sink 90 does not receive heat transfer while making direct contact with the cell assembly 70, its cooling efficiency is not very high, and the cooling path is formed in one of the width directions (-z axis direction) of the battery cell so that a temperature gradient may occur.

Therefore, in order to extend the life of the battery module and/or battery pack, it is necessary to improve the cooling efficiency of the battery module/battery pack so that the temperature of the battery cells does not increase.

### [DETAILED DESCRIPTION OF THE INVENTION]

### [Technical Problem]

It is an object of the present disclosure to provide a battery pack that can minimize space losses occurring when connecting a coolant supply connecting part to a battery module, the coolant supply connecting part supplying an insulating coolant that circulates within the battery module, and a device including the same.

It is an object of the present disclosure to provide a battery pack that can eliminate the disadvantage that when connecting a coolant supply connection part after battery modules are disposed in the battery pack, the space is narrow and thus connection work is difficult.

The objects of the present disclosure are not limited to the foregoing objects, and any other objects and advantages not mentioned herein should be clearly understood by those skilled in the art from the following description and the accompanying drawing.

### [Technical Solution]

According to an embodiment of the present disclosure, there is be provided a battery pack comprising: a battery module that includes a cell assembly formed by stacking a plurality of battery cells, and a module frame for housing the cell assembly, a pack housing on which at least one battery module is mounted, and a cooling tube assembly that is mounted within the pack housing, wherein one end of the battery module is disposed to overlap with the cooling tube assembly.

One end of the battery module and the cooling tube assembly may overlap in a vertical direction.

The battery module further includes a sealing cover formed at one end of the battery module so as to cover the cell assembly, and the sealing cover may overlap with the cooling tube assembly in a vertical direction.

The sealing cover comprises a cover part covering one end of the cell assembly where electrode leads protrude from the plurality of battery cells, and a protrusion part protruding from the cover part, and the protrusion part may overlap with the cooling tube assembly in a vertical direction.

The cooling tube assembly may comprise a cooling tube extending along a direction in which the plurality of battery cells are stacked, and a fixing frame that is assembled with the cooling tube.

Openings are respectively formed in the cooling tube and the protrusion part toward a direction in which the cooling tube and the protrusion part face each other, and the insulating coolant injected into the cooling tube assembly may pass through the openings and flow into the battery module.

The sealing cover and the fixing frame may be coupled to each other by a fastening member.

The battery pack may further comprise a sealing member located between the cooling tube and the protrusion part.

The fixing frame may comprise a plurality of fixed blocks disposed so as to be spaced apart from each other along the direction in which the cooling tube extends.

The cooling tube may comprise a main tube, a hose connected to one end of the main tube, and a connector connected to the hose.

The cooling tube assembly comprises an injection cooling tube assembly and a discharge cooling tube assembly, and the injection cooling tube assembly may be disposed between one of the side surface pack frames of the pack housing and one end of the battery module, and the discharge cooling tube assembly may be disposed between the other one of the side surface pack frames of the pack housing and the other end of the battery module.

The battery module further comprises a first sealing cover formed on one end of the battery module to cover the cell assembly, and a second sealing cover formed on the other end of the battery module to cover the cell assembly, wherein the injection cooling tube assembly may be located at a lower part of the first sealing cover, and the discharge cooling tube assembly may be located at an upper part of the second sealing cover.

The discharge cooling tube assembly comprises a main tube, a hose connected to one end of the main tube, and a connector connected to the hose, and the hose is a tube having bendability, wherein the hose is bent, so that a step difference in height between the main tube and the connector can be formed.

The cooling tube assembly comprises a cooling tube extending along a direction in which the plurality of battery cells are stacked, and a fixing frame that is assembled with the cooling tube, a plurality of battery modules are mounted on the pack housing, and the battery pack further comprises a partition wall disposed between the battery modules adjacent to each other, and one end of the partition wall may comprise a groove part that surrounds the cooling tube.

An insulating coolant may be impregnated into the module frame to directly cool the battery cells.

According to another embodiment of the present disclosure, there is be provided a device comprising the battery pack.

### [Advantageous Effects]

According to the embodiments, cooling tubes and fixing frames can be used to improve space utilization efficiency of the insulating coolant injection part and discharge part.

Also, the process of connecting the insulating coolant injection part and the insulating coolant discharge part is performed before and after the process of disposing the battery module in the battery pack, thereby providing a battery pack and a device including the same, which can eliminate the drawback that the space is narrow and thus connection work is difficult.

Effects obtainable from the present disclosure are not limited to the effects mentioned above, and additional other effects not mentioned will be clearly understood from the description and the accompanying drawings by those skilled in the art.

### [BRIEF DESCRIPTION OF THE DRAWINGS]

FIG. 1 is a diagram showing heat discharge paths in a conventional battery module;
FIG. 2 is an exploded perspective view showing a battery pack according to an embodiment of the present disclosure;
FIG. 3 is a plan view showing the battery pack of FIG. 2;
FIG. 4 is a diagram showing an injection cooling tube assembly according to an embodiment of the present disclosure;
FIG. 5 is an enlarged view of a section A of FIG. 4;
FIG. 6 is a diagram showing a discharge cooling tube assembly according to an embodiment of the present disclosure;
FIG. 7 is a cross-sectional view of a battery module included in the battery pack of FIG. 2;
FIG. 8 is a partially enlarged view which enlarges and shows an area B of FIG. 7;
FIG. 9 is a perspective view showing a battery module according to a comparative example;
FIG. 10 is a diagram showing a state where the battery module of FIG. 9 is disposed within a battery pack;
FIGS. 11 to 16 are diagrams showing a method of manufacturing a battery pack according to another embodiment of the present disclosure; and
FIG. 17 is a diagram showing the path of the insulating coolant in the battery pack according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

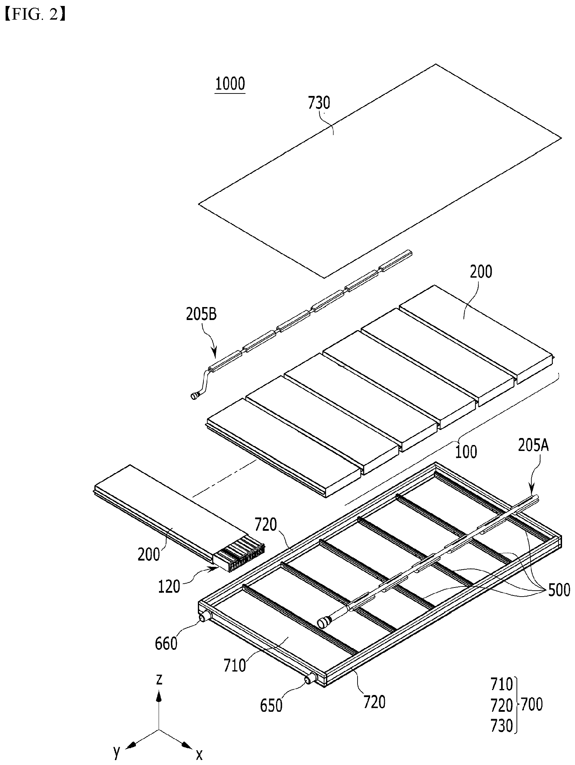

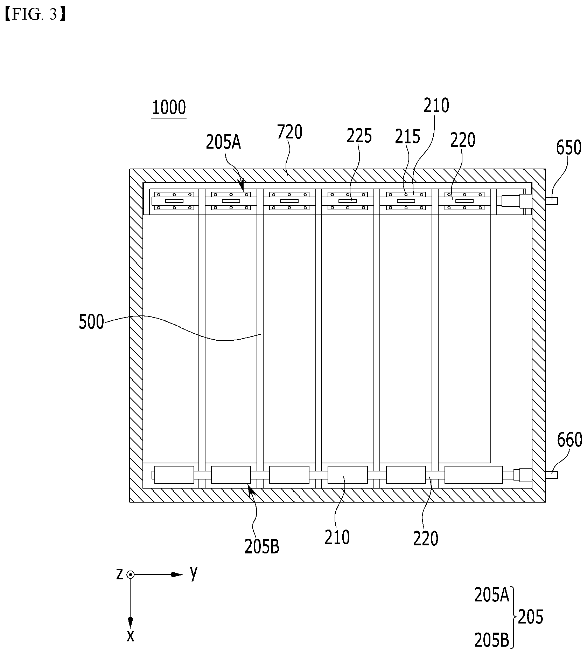

FIG. 2 is an exploded perspective view showing a battery pack according to an embodiment of the present disclosure. FIG. 3 is a plan view showing the battery pack of FIG. 2. In FIG. 3, the configuration of the battery module 100 of FIG. 2 is omitted for convenience in order to show the discharge cooling tube assembly 205B.

Referring to FIG. 2, the battery pack 1000 according to an embodiment of the present disclosure includes a pack housing 700 on which at least one battery module 100 is mounted, wherein the pack housing 700 includes a lower pack frame 710 on which the bottom surface of the battery module 100 is seated, a side surface pack frame 720 that surrounds the side surface of the battery module 100, and an upper pack frame 730 that is located at an upper part of the battery module 100. Here, the lower pack frame 710, the side surface pack frame 720, and the upper pack frame 730 are coupled to each other by a method such as welding, so that the inside of the battery pack 1000 can be sealed.

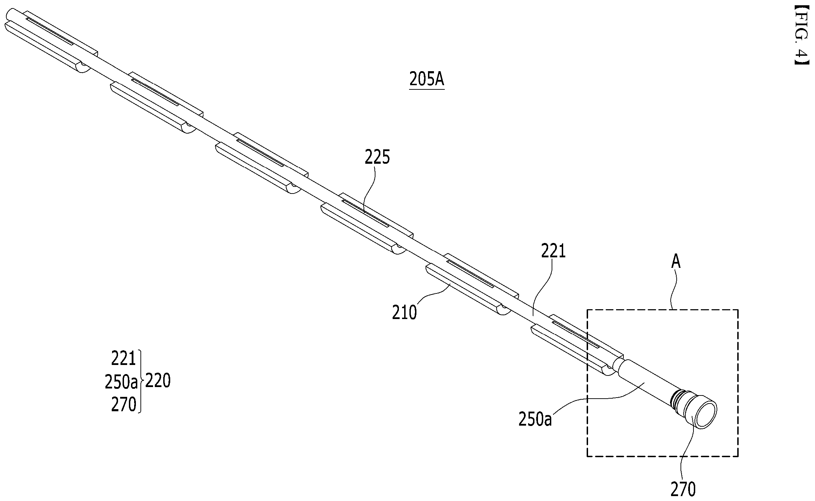

The side surface pack frame 720 is provided with pack ports 650 and 660 that are connected to the cooling tube assembly 205 (FIG. 4), which will be described later.

The battery module 100 may include a cell assembly 120 in which a plurality of battery cells are stacked along a preset direction and a module frame 200 that accommodates the cell assembly. The module frame 200 may be a metal plate-shaped mono frame in which the upper and lower surfaces (z-axis direction and -z-axis direction) and both side surfaces (x-axis direction and -x-axis direction) are integrated. The cell assembly 120 may be mounted inside the module frame 200 to configure the battery module 100. However, the module frame 200 is not limited to the contents described above, and the module frame 200 may include an upper frame and a lower frame, wherein the lower frame is a U-shaped frame including a bottom plate and side surface plates extending upward from each edge of the bottom plate, and the upper frame may have a flat plate-shaped structure.

At least one partition wall 500 is formed on the lower pack frame 710. Here, the lower pack frame 710 and the partition wall 500 and/or the side surface pack frame 720 and the partition wall 500 may be coupled to each other by a method such as welding. However, the method is not limited to welding, and they can also be coupled using an adhesive.

The plurality of battery modules 100 may be partitioned from each other by a side surface pack frame 720 and a plurality of partition walls 500. Specifically, the plurality of battery modules 100 may be respectively disposed in a plurality of areas formed by the side surface pack frame 720 and the partition walls 500 adjacent to each other.

Thereby, the plurality of battery modules 100 are surrounded by the plurality of partition walls 500 and the side surface pack frame 720, so that each battery module 100 can be protected from external impact.

The side surface pack frame 720 may be disposed along the edge of the bottom surface of the lower pack frame 710, and extend upward from the bottom surface of the lower pack frame 710. More specifically, it may extend upward from each edge of the bottom surface of the lower pack frame 710. Here, the upper end of the side surface pack frame 720 may be in contact with the upper pack frame 730. At this time, the upper end of the side surface pack frame 720 and the upper pack frame 730 are coupled to each other by a method such as welding, so that the inside of the battery pack 1000 can be sealed.

The plurality of partition walls 500 may be spaced apart from each other. Here, the separation distance between the partition walls 500 adjacent to each other may be equal to or greater than the width of the battery module 100. Here, the width of the battery module 100 may be measured along the direction in which a plurality of battery cells are stacked.

Further, the end of the partition wall 500 may make contact with the inner surface of the side surface pack frame 720. More specifically, both ends of the partition wall 500 may make contact with the inner surface of the side surface pack frame 720, respectively.

Referring to FIGS. 2 and 3, the battery pack 1000 according to the present embodiment includes a cooling tube assembly 205 that supplies an insulating coolant to the battery module 100. An insulating coolant is a material that has a cooling function while having electrical insulating performance, and may be an insulating oil as an example. The cooling tube assembly 205 includes an injection cooling tube assembly 205A and a discharge cooling tube assembly 205B. The injection cooling tube assembly 205A is disposed between one of the side surface pack frames 720 of the pack housing 700 and one end of the battery module 100, and the discharge cooling tube assembly 205B may be disposed between the other one of the side surface pack frames 720 of the pack housing 700 and the other end of the battery module 100.

Next, the cooling tube assembly according to an embodiment of the present disclosure will be described in detail.

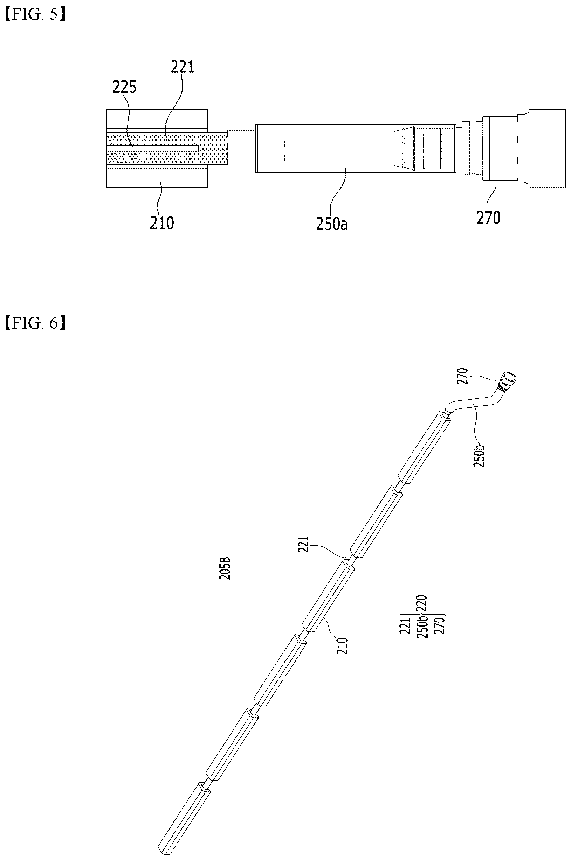

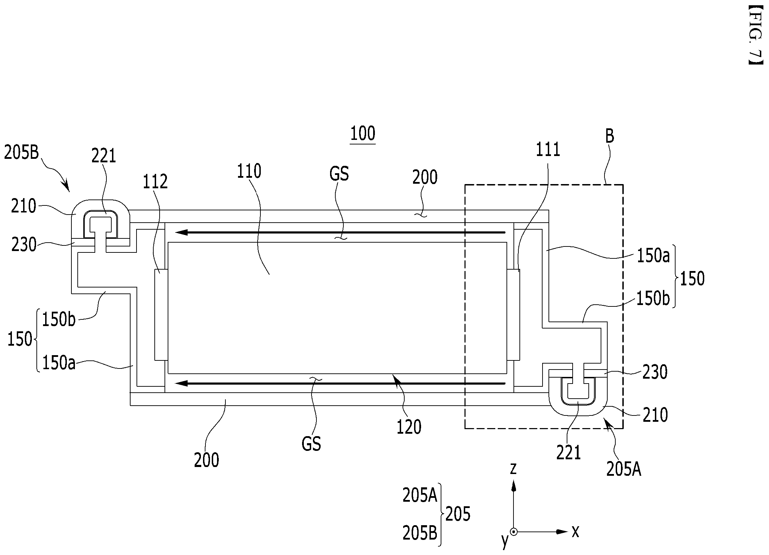

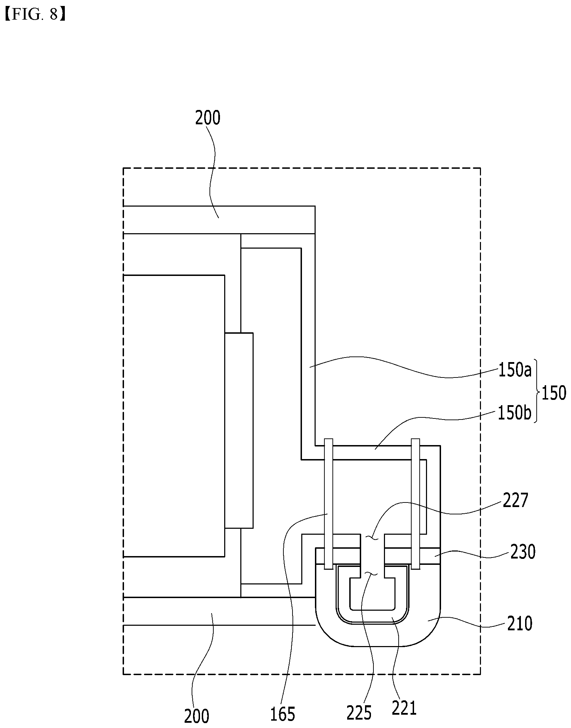

FIG. 4 is a diagram showing an injection cooling tube assembly according to an embodiment of the present disclosure. FIG. 5 is an enlarged view of a section A of FIG. 4. FIG. 6 is a diagram showing a discharge cooling tube assembly according to an embodiment of the present disclosure. FIG. 7 is a cross-sectional view of a battery module included in the battery pack of FIG. 2. FIG. 8 is a partially enlarged view which enlarges and shows an area B of FIG. 7.

Referring to FIGS. 4 and 5, the injection cooling tube assembly 205A according to this embodiment includes a cooling tube 220 extending along the direction in which a plurality of battery cells are stacked (y-axis direction in FIG. 3), and a fixing frame 210 assembled with the cooling tube 220. The cooling tube 220 and the fixing frame 210 may be coupled to each other using an adhesive. However, while the sealing cover (150 in FIG. 7) and the fixing frame 210, which will be described later, are coupled by a fastening member without using an adhesive, the cooling tube 220 can also be fixed together. Alternatively, an adhesive and a fastening member can be used at the same time, and the fastening member may have a bolt coupling structure. At this time, the fixing frame 210 may include a plurality of fixed blocks disposed to be spaced apart from each other along the direction in which the cooling tube 220 extends.

More specifically, the cooling tube 220 included in the injection cooling tube assembly 205A according to this embodiment may include a main tube 221, a hose 250a connected to one end of the main tube 221, and a connector 270 connected to the hose 250a. The hose 250a may be a tube having bendability. The hose 250a of the injection cooling tube assembly 205A may be disposed on a straight line with the direction in which the main tube 221 extends. The main tube 221 may be formed by extruding a metal material, and for example, it may be formed of aluminum. The hose 250a can be used for ease of assembly, and the connector 270 may serve to assemble the main tube 221 and the pack inflow port 650 when connecting them without a separate bonding or connecting process.

The fixing frame 210 according to the present embodiment may have a structure that surrounds the lower part and left and right surfaces of the main tube 221 so as to expose the upper part of the main tube 221. Due to this structure of the fixing frame 210, an opening 225 may be formed in the upper part of the main tube 221.

Referring to FIGS. 2 to 5 and FIG. 7, the insulating coolant flows into a pack inflow port 650 from the outside of the battery pack 1000, and the insulating coolant is supplied to the cooling tube 220 connected to the pack inflow port 650. After that, the insulating coolant flows to the sealing cover 150, which will be described later, through the opening 225 of the main tube 221 included in the cooling tube 220, and the insulating coolant may enter the inside of the battery module 100 through the sealing cover 150. The insulating coolant that has entered the inside of the battery module 100 can directly cool the electrode lead 111 and the busbar (not shown) coupled to the electrode lead 111, and an insulating coolant may be injected into the gap space GS formed between the battery cell 110 and the module frame 200, which forms a cooling flow passage. The insulating coolant may move along the direction of the arrow shown in FIG. 7. Although not shown between the battery cell 110 and the sealing cover 150, a busbar frame for forming a coupling part of the busbar and the electrode leads 111 and 112, an insulating cover, an end plate, and the like, may be disposed. The end plate may be formed to cover the outside of the sealing cover 150.

Referring to FIG. 6, the discharge cooling tube assembly 205B according to an embodiment of the present disclosure includes a cooling tube 220 extending along the direction in which a plurality of battery cells are stacked (y-axis direction in FIG. 3), and a fixing frame 210 assembled with the cooling tube 220. The cooling tube 220 and the fixing frame 210 may be coupled to each other using an adhesive. However, while the sealing cover (150 in FIG. 7) and the fixing frame 210, which will be described later, are coupled by a fastening member without using adhesive, the cooling tube 220 may also be fixed together. Alternatively, the adhesive and the fastening member can be used at the same time, and the fastening member may have a bolt coupling structure. At this time, the fixing frame 210 may include a plurality of fixed blocks disposed to be spaced apart from each other along the direction in which the cooling tube 220 extends.

More specifically, the cooling tube 220 included in the discharge cooling tube assembly 205B according to the present embodiment may include a main tube 221, a hose 250b connected to one end of the main tube 221, and a connector 270 connected to the hose 250b. The hose 250b of the discharge cooling tube assembly 205b is a tube having bendability, wherein the hose 250b is bent, so that a step difference in height between the main tube 221 and the connector 270 can be formed. This point is different from the injection cooling tube assembly 205A described previously. In other words, the hose 250a of the injection cooling tube assembly 205A may be disposed on a straight line with the direction in which the main tube 221 extends. The main tube 221 of the discharge cooling tube assembly 205B may be formed by extruding a metal material, for example, aluminum. The hose 250b can be used for ease of assembly, and the connector 270 may serve to assemble the main tube 221 and the pack discharge port 660 when connecting them without a separate or connection process.

The fixing frame 210 according to the present embodiment may have a structure that surrounds the upper part and left and right surfaces of the main tube 221 so as to expose the lower part of the main tube 221. Due to this structure of the fixing frame 210, an opening 225 may be formed in the lower part of the main tube 221.

Referring to FIGS. 2, 3, 6, and 7, after the insulating coolant injected into the battery module 100 through the injection cooling tube assembly 205A described above directly cools the busbar, battery cells, and the like, the coolant can pass through a sealing cover 150 located at the other end of the battery module 100 under a state of temperature rise, and then discharge into the discharge cooling tube assembly 205B through the opening 225 of the main tube 221 of the discharge cooling tube assembly 205B.

Below, the connection relationship between the battery module 100 and the cooling tube assembly 205 will be looked at in more detail with reference to FIGS. 7 and 8.

Referring to FIGS. 7 and 8, one end of the battery module 100 may be disposed to overlap with the cooling tube assembly 205. At this time, one end of the battery module and the cooling tube assembly 205 may overlap in a vertical direction (z-axis direction in FIG. 7). Such an arrangement structure can increase space efficiency as compared to the method of connecting the connector for circulating the insulating coolant inside the battery module directly to the battery module.

Specifically, the battery module 100 may include sealing covers 150 at both ends of the battery module 100 to cover the cell assembly 120. At this time, the sealing cover 150 may overlap with the cooling tube assembly 205 in a vertical direction. The sealing cover 150 may include a cover part 150a for covering one end of the cell assembly 120 from which the electrode leads 111 and 112 protrude from the plurality of battery cells 110, and a protrusion part 150b protruding from the cover part 150a. The protrusion part 150b may overlap with the cooling tube assembly 205 in the vertical direction.

When the sealing cover 150 formed on one end of the battery module 100 to cover the cell assembly 120 is referred to as a first sealing cover, and the sealing cover 150 formed on one end of the battery module 100 to cover the cell assembly 120 is referred to as a second sealing cover, the injection cooling tube assembly 205A may be located at a lower part of the first sealing cover, and the discharge cooling tube assembly 205B may be located at an upper part of the second sealing cover.

An opening 227 may be formed in the sealing cover 150, an opening 227 may be formed in the lower part of the first sealing cover 150, and an opening 227 may be formed in the upper part of the second sealing cover 150. Specifically, an opening 227 is formed in the protrusion part 150b of the sealing cover 150, and the opening 227 communicates with the opening 225 formed in the main tube 221 of the cooling tube, so that the insulating coolant can pass therethrough.

A sealing member 230 may be located between the cooling tube 220 and the protrusion part 150b. The sealing member 230 may be a sealing foam tape. By forming the sealing member 230, it is possible to prevent the insulating coolant from leaking between the cooling tube 220 and the protrusion part 150b of the sealing cover 150, thereby increasing cooling efficiency. Here, an opening (not shown) is formed even in the sealing member 230, so that the opening of the sealing member 230 can communicate with the opening 225 of the main tube 221 and the opening of the protrusion part 150b described above.

The sealing cover 150 and the fixing frame 210 may be coupled to each other by a fastening member 165. The fastening member 165 may be a bolt coupling member.

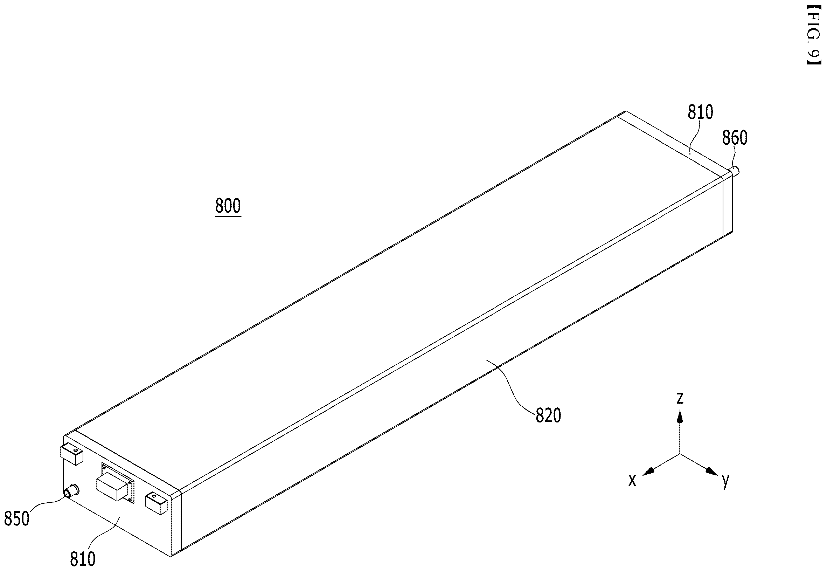

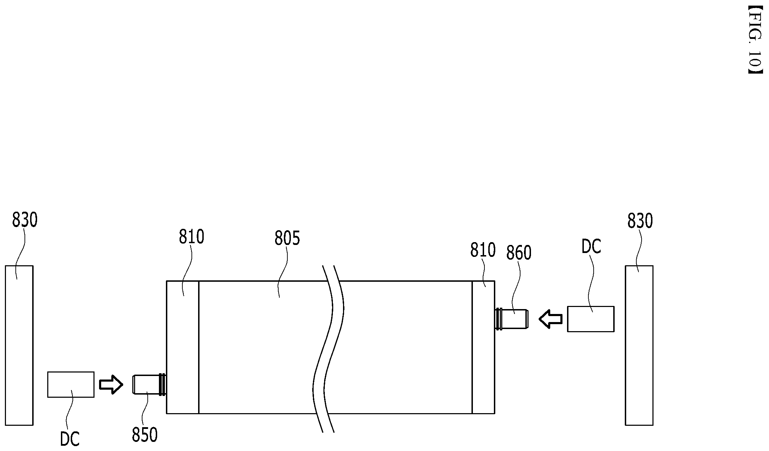

FIG. 9 is a perspective view showing a battery module according to a comparative example. FIG. 10 is a diagram showing a state where the battery module of FIG. 9 is disposed within a battery pack.

Referring to FIGS. 9 and 10, the battery module 800 according to a comparative example may include a module frame 820 that houses the cell assembly 805, and an end plate 810 that covers the front and rear surfaces of the cell assembly 805 excluding the portion of the cell assembly 805 surrounded by the module frame 820. At this time, each of the end plates 810 at the front and rear surfaces of the cell assembly 805 may be formed with an inflow port 850 and a discharge port 860 for inflowing and discharging a coolant into the battery module 800. When the method of connecting a quick connector DC of FIG. 10 directly to the battery module 800 is used to circulate the insulating coolant through the inflow port 850 and the discharge port 860, spatial loss can be very large.

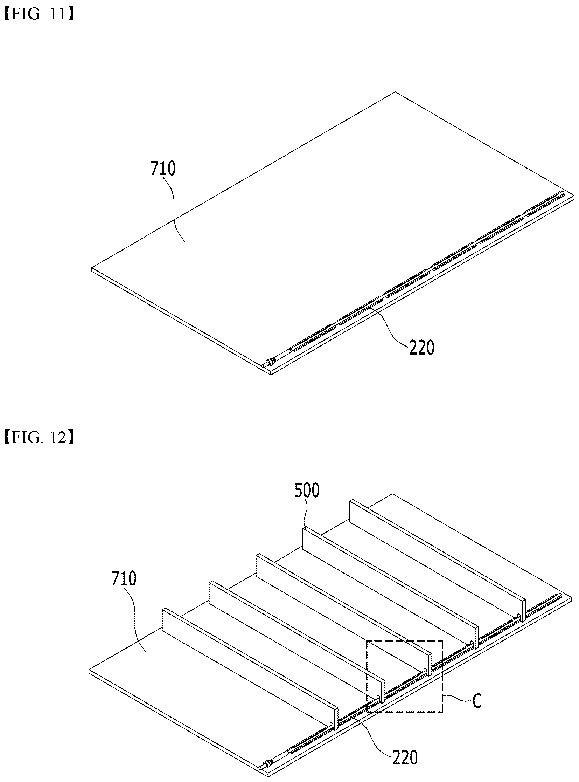

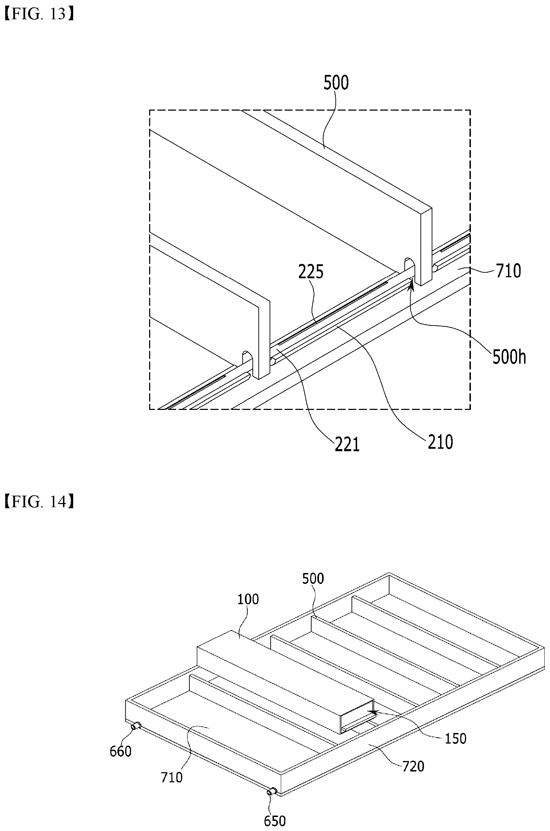

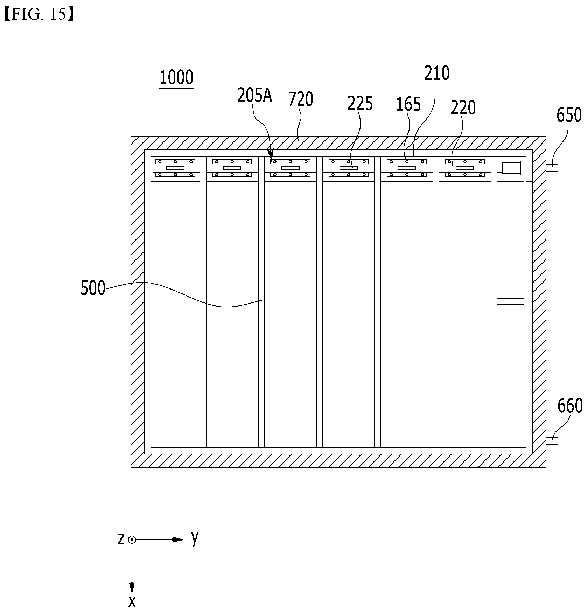

FIGS. 11 to 16 are diagrams showing a method of manufacturing a battery pack according to another embodiment of the present disclosure. FIG. 13 is a partially enlarged view which enlarges and shows an area C of FIG. 12.

Referring to FIGS. 11 and 12, the injection cooling tube assembly 205A described in FIG. 4 may be prepared, and disposed on the lower pack frame 710 of the battery pack 1000. At this time, as shown in FIG. 14, the side surface pack frame 720 of the pack housing is provided with a pack inflow port 650 connected to the injection cooling tube assembly 205A, and the cooling tube 220 of the injection cooling tube assembly 205A may be connected to the pack inflow port 650.

At least one partition wall 500 according to this embodiment may be disposed on the lower pack frame 710. As an example, as shown in FIG. 12, a plurality of partition walls 500 may be disposed to be spaced apart at a predetermined interval, and the predetermined interval may partition an area where a plurality of battery modules 100 shown in FIG. 14, which will be described later, are mounted on the lower pack frame 710. In other words, the partition wall 500 may be disposed between the battery modules 100 adjacent to each other mounted on the lower pack frame 710, which will be described later. At this time, one end of the partition wall 500 may include a groove part 500h that surrounds the cooling tube 220 of the injection cooling tube assembly 205A, as shown in FIG. 13. The groove part 500h may be a hole for allowing the cooling tube 220 to extend along the direction in which a plurality of battery cells are stacked, that is, for allowing the cooling tube 220 to pass through one end of the partition wall 500. The fixing frame 210 included in the cooling tube 220 may be disposed between the partition walls 500 adjacent to each other, whereby the fixing frame 210 may be formed of a plurality of fixed blocks disposed to be spaced apart from each other along the direction in which the cooling tube 220 extends.

After the injection cooling tube assembly 205A is disposed on the lower pack frame 710, the battery module 100 of FIG. 14 may be mounted on the lower pack frame 710. At this time, a plurality of battery modules 100 may be mounted between the partition walls 500 adjacent to each other, and the partition walls 500 can facilitate alignment of the positions in which the plurality of battery modules 100 are mounted.

When the battery module 100 is mounted on the lower pack frame 710, the fixing frame 210 and the sealing cover 150 of the battery module 100 may be coupled by the fastening member 165 as shown in FIGS. 7, 8, and 15. The sealing cover 150 formed at one end of the battery module 100 may be mounted on the pre-installed injection cooling tube assembly 205A. Specifically, the opening 227 of the protrusion part 150b of the sealing cover 150 may be disposed to communicate with the opening 225 of the main tube 221. Before the battery module 100 is mounted, a sealing member 230 may be formed on the main tube 221.

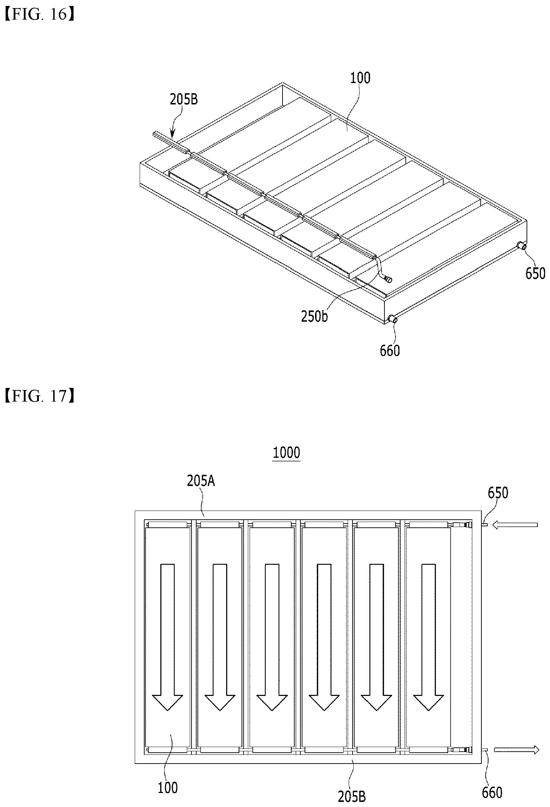

Referring to FIG. 16, after the plurality of battery modules 100 are mounted on the lower pack housing, the discharge cooling tube assembly 205B may be mounted on the other end of the battery module 100. In the case of the discharge cooling tube assembly 205B, as shown in the upper left corner of FIG. 7, the discharge cooling tube assembly 205B may be mounted on the upper part of the protrusion part 150b of the sealing cover 150. At this time, similar to the coupling method using the fastening member 165 described in the injection cooling tube assembly 205A of FIG. 8, the fixing frame 210 of the discharge cooling tube assembly 205B and the sealing cover 150 may be coupled by a fastening member such as a bolt coupling method.

Most of the configurations of the discharge cooling tube assembly 205B are equal to those of the injection cooling tube assembly 205A, and the point that the hose is a tube having bendability and the hose is bent so that a step difference in height between the main tube and the connector is formed, and the position where the opening of the main tube is formed, are different from the inflow cooling tube. Therefore, most of the contents regarding the injection cooling tube assembly 205A described with reference to FIGS. 7 and 8 can be applied to the discharge cooling tube assembly 205B.

By bending the hose 250b included in the discharge cooling tube assembly 205B, the pack discharge port 660 formed on the side surface pack frame 720 and the cooling tube 220 can be connected.

As described above, the injection cooling tube assembly 205A and the discharge cooling tube assembly 205B are formed into two types, and the injection cooling tube assembly 205A and the discharge cooling tube assembly 205B are installed in the battery pack 1000 separately before and after the battery module 100 is mounted on the pack housing, thereby being able to eliminate the drawback that when connecting the battery module 100 and the cooling tube assembly 205, the space is narrow and thus connection work is difficult. Specifically, as shown in FIG. 10, in the conventional method in which the inflow port and discharge port of the module are directly connected with a quick connector, an assembly space for an operator to connect the quick connector is required in addition to the space for the quick connector. For example, if it is a method of holding and inserting the quick connector by hand, space may be lost because the pack and module require additional space that the operator's hand and the quick connector can enter.

FIG. 17 is a diagram showing the path of the insulating coolant in the battery pack according to an embodiment of the present disclosure.

Referring to FIGS. 7 and 17, after the insulating coolant flows in from the outside of the battery pack 1000 through the pack inflow port 650, discharge path to the outside of the battery pack 1000 can be confirmed through the injection cooling tube assembly 205A, the battery module 100, the discharge cooling tube assembly 205B, and the pack discharge port 660. In this way, the insulating coolant is impregnated into the battery module 100, thereby directly cooling the busbar, electrode lead, and battery cell, and increasing cooling efficiency.

The battery pack according to the present embodiment may have a structure in which one or more of the battery modules are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
1000: battery pack
120: cell assembly
150: sealing cover
150a: cover part
150b: protrusion part
165: fastening member
200: module frame
205: cooling tube assembly
210: fixing frame
220: cooling tube
221: main tube
225, 227: opening
230: sealing member
250a, 250b: hose
270: connector
500: partition wall
500h: groove part
650: pack inflow port
660: pack discharge port
700: pack housing
710: lower pack frame
720: side surface pack frame
730: upper pack frame

## Claims

1. A battery pack comprising:
a battery module that includes a cell assembly formed by stacking a plurality of battery cells, and a module frame for housing the cell assembly,
a pack housing on which at least one battery module is mounted, and
a cooling tube assembly that is mounted within the pack housing,
wherein one end of the battery module is disposed to overlap with the cooling tube assembly.

2. The battery pack according to claim 1, wherein:
one end of the battery module and the cooling tube assembly overlap in a vertical direction.

3. The battery pack according to claim 1, wherein:
the battery module further comprises a sealing cover formed at one end of the battery module so as to cover the cell assembly, and
the sealing cover overlaps with the cooling tube assembly in a vertical direction.

4. The battery pack according to claim 3, wherein:
the sealing cover comprises a cover part covering one end of the cell assembly where electrode leads protrude from the plurality of battery cells, and a protrusion part protruding from the cover part, and
the protrusion part overlaps with the cooling tube assembly in a vertical direction.

5. The battery pack according to claim 4, wherein:
the cooling tube assembly comprises a cooling tube extending along a direction in which the plurality of battery cells are stacked, and a fixing frame that is assembled with the cooling tube.

6. The battery pack according to claim 5, wherein:
openings are respectively formed in the cooling tube and the protrusion part toward a direction in which the cooling tube and the protrusion part face each other, and the insulating coolant injected into the cooling tube assembly passes through the openings and flows into the battery module.

7. The battery pack according to claim 5, wherein:
the sealing cover and the fixing frame are coupled to each other by a fastening member.

8. The battery pack according to claim 5,
further comprising a sealing member located between the cooling tube and the protrusion part.

9. The battery pack according to claim 5, wherein:
the fixing frame comprises a plurality of fixed blocks disposed so as to be spaced apart from each other along the direction in which the cooling tube extends.

10. The battery pack according to claim 5, wherein:
the cooling tube comprises a main tube, a hose connected to one end of the main tube, and a connector connected to the hose.

11. The battery pack according to claim 1, wherein:
the cooling tube assembly comprises an injection cooling tube assembly and a discharge cooling tube assembly, and
the injection cooling tube assembly is disposed between one of the side surface pack frames of the pack housing and one end of the battery module, and the discharge cooling tube assembly is disposed between the other one of the side surface pack frames of the pack housing and the other end of the battery module.

12. The battery pack according to claim 11, wherein:
the battery module further comprises a first sealing cover formed on one end of the battery module to cover the cell assembly, and a second sealing cover formed on the other end of the battery module to cover the cell assembly, and
the injection cooling tube assembly is located at a lower part of the first sealing cover, and the discharge cooling tube assembly is located at an upper part of the second sealing cover.

13. The battery pack according to claim 12, wherein:
the discharge cooling tube assembly comprises a main tube, a hose connected to one end of the main tube, and a connector connected to the hose, and
the hose is a tube having bendability, wherein the hose is bent, so that a step difference in height between the main tube and the connector is formed.

14. The battery pack according to claim 1, wherein:
the cooling tube assembly comprises a cooling tube extending along a direction in which the plurality of battery cells are stacked, and a fixing frame that is assembled with the cooling tube,
a plurality of battery modules are mounted on the pack housing, and the battery pack further comprises a partition wall disposed between the battery modules adjacent to each other, and
one end of the partition wall comprises a groove part that surrounds the cooling tube.

15. The battery pack according to claim 1, wherein:
an insulating coolant is impregnated into the module frame to directly cool the battery cells.

16. A device comprising the battery pack according to claim 1.
